# EUROPEAN PATENT SPECIFICATION

(11) **EP 3 489 063 B1**
(45) Date of publication and mention of the grant of the patent: **09.10.2024**
(21) Application number: 17831386.2
(22) Date of filing: 21.07.2017
(51) Int. Cl.: B60K 15/03, F17C 1/16, F17C 13/04, F17C 1/06

(54) **HIGH-PRESSURE VESSEL FOR VEHICLE**
HOCHDRUCKBEHÄLTER FÜR EIN FAHRZEUG
RÉCIPIENT À HAUTE PRESSION POUR VÉHICULE

(30) Priority: 21.07.2016 KR 20160092386
(43) Date of publication of application: 29.05.2019
(73) Proprietor: Dong Hee Industrial Co., Ltd., Ulsan 44784 (KR)
(72) Inventor: PARK, Kyun Bum, Hwaseong-si Gyeonggi-do 18429 (KR); CHO, Hyung Joo, Gwangmyeong-si Gyeonggi-do 14221 (KR); KIM, Lee Park, Yongin-si Gyeonggi-do 16961 (KR); KYE, Tae Hong, Suwon-si Gyeonggi-do 16324 (KR)
(74) Representative: Isarpatent
(86) International application number: PCT/KR2017/007888
(87) International publication number: WO 2018/016914

(56) References cited:
- EP-A1- 3 433 529
- WO-A1-2011/047752
- DE-A1- 102014 009 341
- JP-A- 2007 263 290
- JP-A- 2011 102 614
- JP-A- 2014 222 081
- JP-A- H10 332 082
- KR-B1- 100 469 636

## Description

### Technical Field

The present invention relates generally to a high-pressure vessel for a vehicle. More particularly, the present invention relates to a high-pressure vessel for a vehicle, whereby high-pressure gas in the vessel is prevented from leaking through a gap between a plastic liner and a metallic nozzle boss to outside.

### Background Art

Generally, a compressed natural gas (CNG) vehicle or a hydrogen fuel cell vehicle includes a high-pressure vessel mounted therein, by which a fuel in an evaporated state is high-pressurized and stored.

The high-pressure vessel includes a plastic liner, a composite material layer covering the plastic liner, and a metallic nozzle boss. For weight reduction, the plastic liner is made of a plastic material such as high-density polyethylene, polypropylene, or polyester resin, the composite material layer made by mixing carbon fiber or glass fiber with polymer resin such as epoxy resin for strength maintenance is combined with the plastic liner so as to cover a surface of the plastic liner, and the nozzle boss is manufactured of a metallic material so as to be securely combined with a regulator or a valve (hereinbelow, referred to as a valve), which is manufactured of the metallic material.

Meanwhile, since the plastic liner and the metallic nozzle boss are made of different materials, an adhesive cannot be used so as to combine the plastic liner with the metallic nozzle. Accordingly, maintaining airtightness between the plastic liner and the metallic nozzle boss is an important issue determining the performance and stability of the high-pressure vessel.

Pressure in the high-pressure vessel is normally a high pressure of 700ba, and when the airtightness between the plastic liner and the metallic nozzle boss is lowered, a high-pressure gas stored in the high-pressure vessel leaks to outside, and particularly, the nozzle boss is separated from the plastic liner by the high-pressure gas, which may cause an accident.

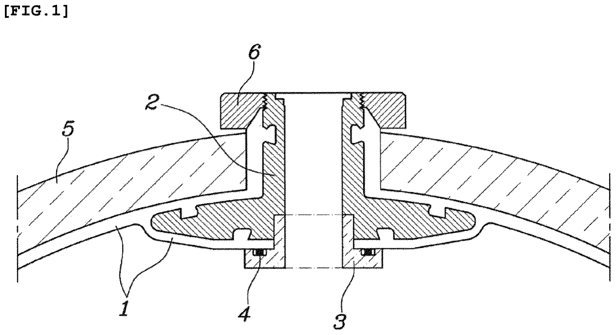

As shown in FIG. 1, according to a conventional high-pressure vessel showing a portion on which the plastic liner and the nozzle boss are combined with each other, the plastic liner 1 and the metallic nozzle boss 2 are configured to be combined with each other by injection molding. That is, when the plastic liner 1 is injection-molded after the metallic nozzle boss 2 manufactured previously is put in an injection mold, the plastic liner 1 and the metallic nozzle boss 2 are combined with each other.

Due to the characteristics of an injection combination, the plastic liner 1 and the metallic nozzle boss 2, which are made of different materials, cannot be perfectly combined with each other and accordingly, a minute gap between the plastic liner 1 and the metallic nozzle boss 2 occurs.

When there is a gap between the plastic liner 1 and the metallic nozzle boss 2, the high-pressure gas in the vessel leaks through the gap between the plastic liner 1 and the metallic nozzle boss 2 to the outside.

Accordingly, according to the conventional high-pressure vessel, a lower fastening member 3, which is additionally manufactured, is configured to be combined with the metallic nozzle boss 2 so as to remove the gap between the plastic liner 1 and the metallic nozzle boss 2.

The lower fastening member 3 functions to press an end part of the plastic liner 1 toward the metallic nozzle boss 2 so as to bring the plastic liner into close contact with the metallic nozzle boss.

The lower fastening member 3 is made of a metallic material so as to be securely fastened to the metallic nozzle boss 2 and is normally screwed to the metallic nozzle boss.

However, since the plastic liner 1 and the metallic lower fastening member 3 are respectively made of different materials, a gap between the plastic liner 1 and the lower fastening member 3 occurs, and the high-pressure gas in the vessel leaks through the gap between the plastic liner 1 and the lower fastening member 3 and through the gap between the plastic liner 1 and the metallic nozzle boss 2 to an outside of the plastic liner 1.

To prevent this, a rubber sealing member 4 (an O-ring) may be combined with the lower fastening member 3 so as to remove the gap between the plastic liner 1 and the lower fastening member 3.

However, when the rubber sealing member 4 is continuously pressurized by the high-pressure gas, durability thereof lowers rapidly and accordingly, the leak of the high-pressure gas to the outside cannot be perfectly prevented.

In addition, the life of the rubber sealing member 4 is normally a short period of four to five years, and is further shortened particularly when pressure of the high-pressure gas is continuously applied to the rubber sealing member. In addition, since the life of a vehicle having the high-pressure vessel mounted therein is longer than the life of the sealing member 4, the high-pressure vessel is required to be periodically replaced due to the durability reduction of the sealing member 4.

That is, in a structure of the conventional high-pressure vessel, the lower fastening member 3 and the sealing member 4 are used to remove the gap between the plastic liner 1 and the metallic nozzle boss 2, which are made of different materials, whereby the number of components, a weight, a cost, and man-hours are increased. Particularly, when the durability of the sealing member 4 lowers since the sealing member 4 is made of a rubber material, which has short life, the high-pressure gas in the vessel still leaks to the outside and due to the sealing member 4 having the lowered durability, the high-pressure vessel is required to be periodically replaced.

Reference numerals 5 and 6 shown in FIG. 1, which are not described, are the composite material layer and an upper fastening member, respectively.

As a related conventional art, there is Korean Utility Model Registration No. 20-0372069.

WO2011047752A1 discloses a pressure vessel for storing liquid or gaseous media. The pressure vessel comprises a plastic inner vessel, at least one neck piece connected thereto as a separate piece, said neck piece being arranged on the vessel neck in the area of the vessel opening, and a support casing that at least partially encloses the plastic inner vessel and the neck piece. The neck piece is provided with means for accommodating a connection fitting. The pressure vessel is characterized by an insert, which forms at least part of the vessel neck and which forms a sealing seat for the fitting to be inserted into the neck piece.

EP3433529A1 discloses a pressure vessel that includes a liner, a composite shell covering the liner, and at least one boss assembly having a metal boss. The metal boss is positioned at respective openings through the liner and the composite shell. A plastic layer is formed between the liner and the metal boss. The plastic layer adheres to both the metal boss and the liner to form a seal at the interface between the metal boss and liner. The plastic layer further increases a torque strength of the metal boss.

The foregoing is intended merely to aid in the understanding of the background of the present invention, and is not intended to mean that the present invention falls within the purview of the related art that is already known to those skilled in the art.

### Disclosure

### Technical Problem

The present invention has been made keeping in mind the above problems occurring in the prior art, and an object of the present invention is to provide a high-pressure vessel for a vehicle, whereby an airtightness structure between a plastic liner and a metallic nozzle boss is improved such that high-pressure gas in the vessel is fundamentally prevented from leaking to outside of the plastic liner.

### Technical Solution

In order to accomplish the above object, the present invention provides a high-pressure vessel for a vehicle, the high-pressure vessel including: a plastic liner including a through hole provided thereon; a plastic sealing member, a portion of which is positioned in the through hole and a remaining portion of which overlaps with the plastic liner, wherein the portion overlapping with the plastic liner is combined with the plastic liner by thermal bonding; and a metallic nozzle boss combined with the plastic sealing member so as to cover the portion of the plastic sealing member overlapping with the plastic liner; a composite material layer combined with the plastic liner and the metallic nozzle boss so as to cover the plastic liner and the metallic nozzle boss; the high-pressure vessel for a vehicle wherein the plastic sealing member includes a cylindrical part positioned in the through hole of the plastic liner and protruding in an outer side direction of the plastic liner, and a wing part of a circular plate shape provided to bend so as to correspond a shape of the plastic liner while extending in a radial direction from an end of the cylindrical part and a predetermined section of which is combined with an outer surface of the plastic liner by the thermal bonding; wherein the metallic nozzle boss is screwed to the plastic sealing member; and wherein a major portion of a lower surface of the metallic nozzle boss , which faces the plastic liner, is in contact with the plastic sealing member and only some portion thereof is in contact with the plastic liner.

The plastic liner may be made of a plastic resin by blow molding and be combined with the plastic sealing member by the thermal bonding during the blow molding of the plastic liner.

The wing part may include an inclined part provided on an end part thereof so as to incline toward a protruding direction of the cylindrical part, wherein the inclined part of the wing part may be provided to have the same shape as an inclined part of the plastic liner, and the inclined part of the wing part and the inclined part of the plastic liner may be combined with each other by the thermal bonding.

The metallic nozzle boss may include: a flange part being combined with the wing part of the plastic sealing member so as to cover the wing part thereof, and a boss part extending along a longitudinal direction of the cylindrical part of the plastic sealing member from the flange part, wherein the boss part may include threads provided on an inner circumferential surface thereof so as to be engaged with a valve.

The flange part of the metallic nozzle boss may be provided to be longer than the wing part of the plastic sealing member so as to be combined with the wing part such that the flange part completely covers the wing part.

The cylindrical part of the plastic sealing member may be provided to extend up to the threads provided on the boss part of the metallic nozzle boss such that the cylindrical part and the threads are connected to each other.

The high-pressure vessel may further include the valve screwed to the boss part of the metallic nozzle boss by being inserted thereinto.

A front end of the valve may be provided to be inserted to an inner side of the cylindrical part of the plastic sealing member, and a front end part of the valve positioned on the inner side of the cylindrical part may include multiple valve O-rings combined thereon so as to maintain airtightness between the valve and the cylindrical part.

The plastic liner and the plastic sealing member may be combined with each other only by the thermal bonding without additionally including a fastening member and a rubber sealing member.

### Advantageous Effects

The present invention has a structure in which a gap does not occur between the plastic liner and the plastic sealing member due to the plastic sealing member being combined with the plastic liner by thermal bonding, thereby completely blocking the leakage of high-pressure gas to a gap between the plastic liner and the plastic sealing member.

In addition, as the plastic liner and the plastic sealing member made of the same materials are combined with each other by the thermal bonding, use of the conventional lower fastening member is unnecessary and further, use of a rubber sealing member for maintaining airtightness is unnecessary, whereby productivity enhancement via reduction in the number of components, a weight, a cost, and man-hours is promoted.

### Description of Drawings

FIG. 1 is a longitudinal sectional view showing a combined portion of a plastic liner with a metallic nozzle boss in a conventional high-pressure vessel;
FIG. 2 is a perspective view of the high-pressure vessel according to the present invention;
FIG. 3 is an exploded perspective view of FIG. 2;
FIG. 4 is a longitudinal sectional view of FIG. 2; and
FIG. 5 is an enlarged view of a combined portion of a metallic nozzle boss in FIG. 4.

### Mode for Invention

Hereinbelow, a high-pressure vessel for a vehicle for a vehicle according to an exemplary embodiment of the present invention will be described in detail with reference to the accompanying drawings.

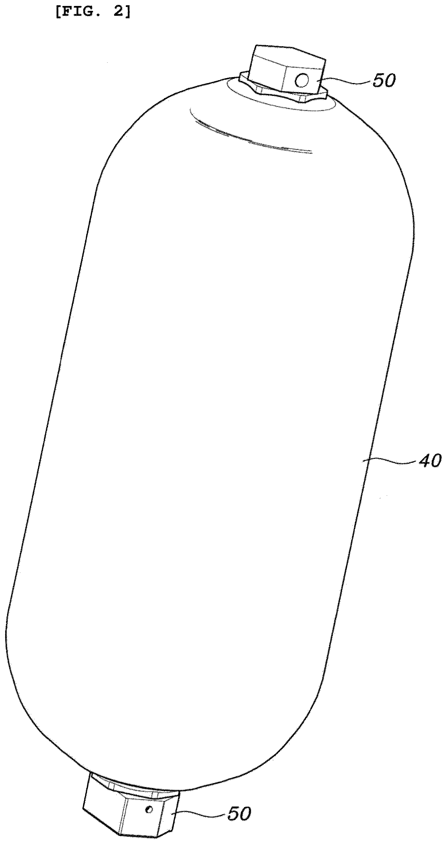

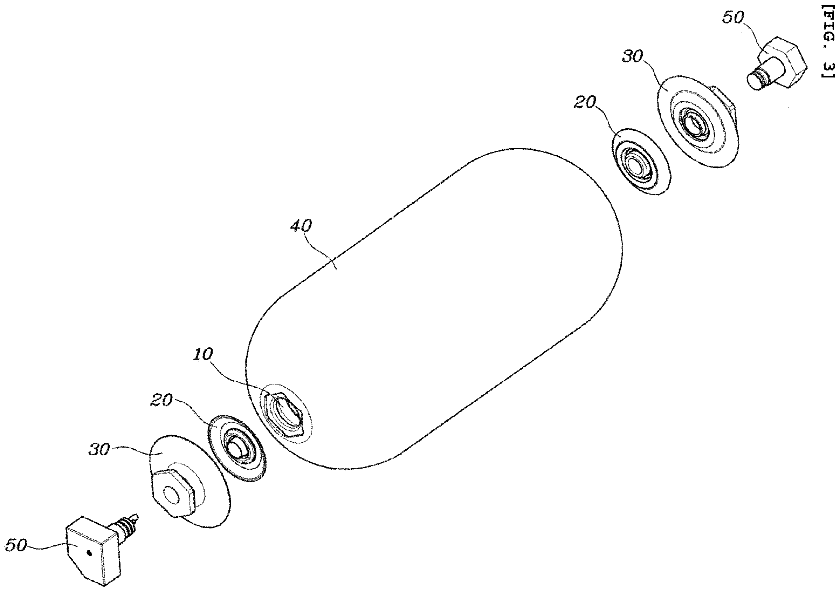

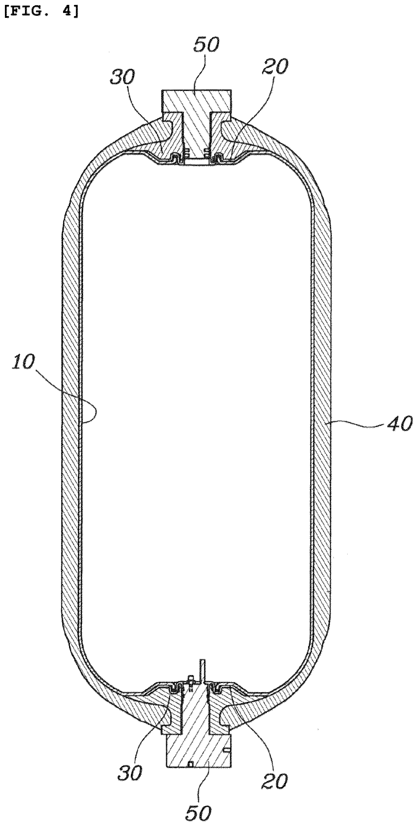

As shown in FIGS. 2 to 5, the high-pressure vessel for a vehicle according to the present invention includes: a plastic liner 10 including a through hole 11 provided thereon; a plastic sealing member 20, a portion of which is positioned in the through hole 11 and a remaining portion of which overlaps with the plastic liner 10, wherein the portion overlapping with the plastic liner 10 is combined with the plastic liner 10 by thermal bonding; a metallic nozzle boss 30 combined with the plastic sealing member 20 so as to cover the portion of the plastic sealing member 20 overlapping with the plastic liner 10; a composite material layer 40 combined with the plastic liner 10 and the metallic nozzle boss 30 so as to cover the plastic liner and the metallic nozzle boss; and a valve 50 screwed to the metallic nozzle boss 30.

For weight reduction, the plastic liner 10 is integrally manufactured of a plastic material such as high-density polyethylene, polypropylene, or polyester resin by blow molding.

A material of the plastic sealing member 20 is preferably the same material as a material of the plastic liner 10 and is manufactured by injection molding, and during the blow molding of the plastic liner 10, the plastic sealing member 20 is combined with the plastic liner 10 by the thermal bonding.

When the plastic liner 10 and the plastic sealing member 20, which are made of the same materials, are combined with each other by the thermal bonding, the plastic liner 10 and the plastic sealing member 20 are completely combined with each other so as not to prevent a gap therebetween. Accordingly, high-pressure gas can be completely prevented from leaking to the gap between the plastic liner 10 and the plastic sealing member 20.

In addition, as the plastic liner 10 and the plastic sealing member 20, which are made of the same materials, are combined with each other by the thermal bonding, use of a conventional lower fastening member 3 is unnecessary, and further, use of a rubber sealing member 4 for maintaining airtightness is unnecessary, whereby productivity enhancement via reduction in the number of components, a weight, a cost, and man-hours is promoted.

The metallic nozzle boss 30 is made of a metal, which is different from materials of the plastic liner 10 and the plastic sealing member 20, so as to be securely combined with the valve 50 made of a metal.

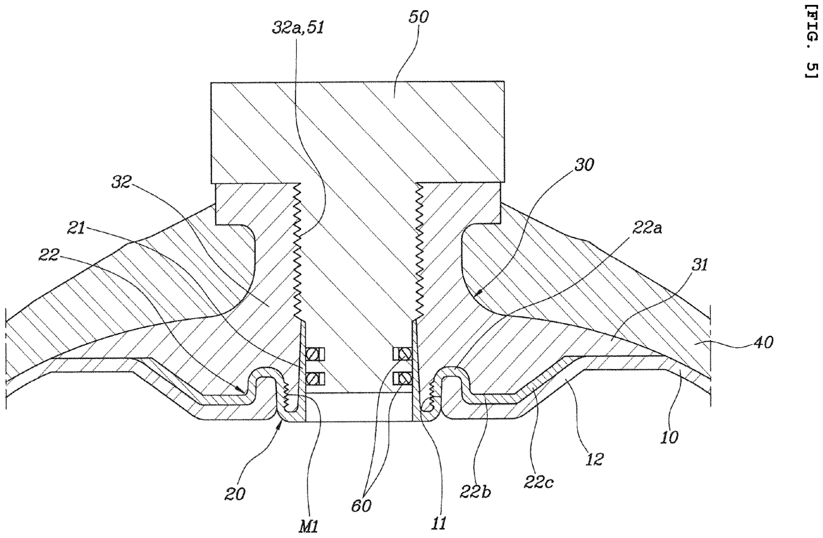

As shown in FIG. 5, the metallic nozzle boss 30 is screwed to the plastic sealing member 20 (M1), and in this case, a major portion of a lower surface of the metallic nozzle boss, which faces the plastic liner 10, is in contact with the plastic sealing member 20 and only some portion thereof is in contact with the plastic liner 10.

Though minute gaps may occur between the metallic nozzle boss 30 and the plastic liner 10, which are made of different materials, and between the metallic nozzle boss 30 and the plastic sealing member 20, which are made of different materials, the gaps do not directly communicate with an inner part of the high-pressure vessel.

That is, the gap between the metallic nozzle boss 30 and the plastic liner 10 and the gap between the metallic nozzle boss 30 and the plastic sealing member 20 communicate with the inner part of the high-pressure vessel only by a gap between the plastic liner 10 and the plastic sealing member 20.

However, according to the embodiment of the present invention, the plastic liner 10 and the plastic sealing member 20, which are made of the same materials, are completely combined with each other by the thermal bonding so as not to prevent the gap. Accordingly the gap between the metallic nozzle boss 30 and the plastic liner 10 and the gap between the metallic nozzle boss 30 and the plastic sealing member 20 are blocked by the plastic liner 10 and the plastic sealing member 20 combined with each other by the thermal bonding such that the gaps do not directly communicate with the inner part of the high-pressure vessel. Accordingly, the high-pressure gas stored in the high-pressure vessel is fundamentally prevented from leaking to the outside.

The composite material layer 40 made by mixing carbon fiber or glass fiber with polymer resin such as epoxy resin for strength maintenance is combined with the plastic liner 10 and the nozzle boss 30 so as to cover surfaces of the plastic liner 10 and the nozzle boss 30.

The valve 50 manufactured of a metallic material is combined with the metallic nozzle boss 50 by being screwed thereto.

The plastic sealing member 20 includes a cylindrical part 21 positioned in the through hole 11 of the plastic liner 10 and protruding in an outer side direction of the plastic liner 10; and a wing part 22 of a circular plate shape provided to bend so as to correspond a shape of the plastic liner 10 while extending in a radial direction from an end of the cylindrical part 21 and a predetermined section of which is combined with an outer surface of the plastic liner 10 by the thermal bonding.

The wing part 22 includes a curved part 22a formed curvedly so as to have a wavy shape, a horizontal part 22b extending in a horizontal direction, and an inclined part 22c provided on the horizontal part 22b to incline toward a protruding direction of the cylindrical part 21.

The inclined part 22c of the wing part 22 is provided to have the same shape as an inclined part 12 of the plastic liner 10, and the inclined part 22c and the inclined part 12 are combined with each other by the thermal bonding.

As mentioned before, the plastic liner 10 is blow molded and is combined with the plastic sealing member 20 by the thermal bonding during the blow molding. A combined portion of the plastic sealing member 20 with the plastic liner 10 by the thermal bonding is the wing part 22, wherein the curved part 22a of the wing part 22 is weak in a combining force due to a curved shape thereof and the horizontal part 22b, which is weak in a support force, may be deformed by a pressure occurring during the thermal bonding. Accordingly, the inclined part 22c that is strong in a combining force and can sufficiently bear the pressure occurring during the thermal bonding is preferably combined with the inclined part 12 of the plastic liner 10 by the thermal bonding.

The metallic nozzle boss 30 includes a flange part 31 being combined with the wing part 22 of the plastic sealing member 20 so as to cover the wing part 22 thereof; and a boss part 32 extending along a longitudinal direction of the cylindrical part 21 of the plastic sealing member 20 from the flange part 31, wherein the boss part 32 includes threads 32a provided on an inner circumferential surface thereof so as to be engaged with the valve 50 and accordingly, is engaged with threads 51 of the valve 50.

The flange part 31 of the metallic nozzle boss 30 is provided to be longer than the wing part 22 of the plastic sealing member 20 so as to be combined with the wing part 22 such that the flange part completely covers the wing part. Accordingly, the wing part 22 of the plastic sealing member 20 is completely brought into close contact with the plastic liner 10 by an applying force of the flange part 31 of the metallic nozzle boss 30 so as to maintain a more stable combining force with the plastic liner and sufficiently bear a pressure of the high-pressure gas stored in the vessel.

A length of the flange part 31 is preferably configured to be roughly 30% to 80% longer than a length of the wing part 22, but is not limited thereto.

The cylindrical part 21 of the plastic sealing member 20 is preferably provided to extend up to the threads 32a provided on the boss part 32 of the metallic nozzle boss 30 such that the cylindrical part 21 and the threads 32a are combined with each other.

That is, a gap between an end of the cylindrical part 21 and the threads 32a is removed so as to maintain a secure combining force of the plastic sealing member 20 and particularly, to prevent a gas leak at the maximum.

The valve 50 is inserted into the boss part 32 to be screwed to the boss part 32. In this case, a front end of the valve 50 is provided to be inserted to an inner side of the cylindrical part 21 of the plastic sealing member 20, and a front end part of the valve 50 positioned on the inner side of the cylindrical part 21 includes multiple valve O-rings 60 combined thereon so as to maintain airtightness between the valve and the cylindrical part 21.

Each of the valve O-rings 60 is a rubber in a material thereof and prevents the high-pressure gas in the vessel from leaking through a gap between the cylindrical part 21 of the plastic sealing member 20 and the valve 50. When durability of the valve O-ring decreases due to use thereof, only the valve O-ring 60 is required to be replaced with a new valve O-ring after separating the valve 50 from the boss part 32.

According to the embodiment described above, the present has a structure in which a gap does not occur between the plastic liner 10 and the plastic sealing member 20 due to the plastic sealing member 20 being combined with the plastic liner 10 by thermal bonding, thereby completely blocking the leakage of high-pressure gas to a gap between the plastic liner 10 and the plastic sealing member 20.

In addition, as the plastic liner 10 and the plastic sealing member 20 made of the same materials are combined with each other by the thermal bonding, use of the conventional lower fastening member 3 is unnecessary, and further, use of the rubber sealing member 4 for maintaining the airtightness is unnecessary, whereby the productivity enhancement via the reduction in the number of components, a weight, a cost, and man-hours is promoted.

Although the preferred embodiment of the present invention has been described for illustrative purposes, those skilled in the art will appreciate that various modifications, additions and substitutions are possible, without departing from the scope of the invention as defined in the accompanying claims.

### <Description of the Reference Numerals in the Drawings>

| | | | |
|---|---|---|---|
| 10: | Plastic liner | 11: | Through hole |
| 12: | Inclined part | 20: | Plastic sealing member |
| 21: | Cylindrical part | 22: | Wing part |
| 30: | Metallic nozzle boss | 31: | Flange part |
| 32: | Boss part | 40: | Composite material layer |
| 50: | Valve | 60: | Valve O-ring |

## Claims

1. A high-pressure vessel for a vehicle, the high-pressure vessel comprising:
a plastic liner (10) including a through hole (11) provided thereon;
a plastic sealing member (20), a portion of which is positioned in the through hole (11) and a remaining portion of which overlaps with the plastic liner (10),
wherein the portion overlapping with the plastic liner (10) is combined with the plastic liner (10) by thermal bonding;
a metallic nozzle boss (30) combined with the plastic sealing member (20) so as to cover the portion of the plastic sealing member (20) overlapping with the plastic liner (10); and
a composite material layer (40) combined with the plastic liner (10) and the metallic nozzle boss (30) so as to cover the plastic liner (10) and the metallic nozzle boss (30); the high-pressure vessel for a vehicle wherein
the plastic sealing member (20) includes
a cylindrical part (21) positioned in the through hole (11) of the plastic liner (10) and protruding in an outer side direction of the plastic liner (10), and
a wing part (22) of a circular plate shape provided to bend so as to correspond a shape of the plastic liner (10) while extending in a radial direction from an end of the cylindrical part and a predetermined section of which is combined with an outer surface of the plastic liner (10) by the thermal bonding;
wherein the metallic nozzle boss (30) is screwed to the plastic sealing member (20) (M1); and
**characterised in that**
a major portion of a lower surface of the metallic nozzle boss (30), which faces the plastic liner (10), is in contact with the plastic sealing member (20) and only some portion thereof is in contact with the plastic liner (10).

2. The high-pressure vessel of claim 1, wherein the plastic liner (10) is made of a plastic resin by blow molding and is combined with the plastic sealing member (20) by the thermal bonding during the blow molding of the plastic liner (10).

3. The high-pressure vessel of claim 1, wherein the wing part (22) includes an inclined part (22c) provided on an end part thereof so as to incline toward a protruding direction of the cylindrical part (21),
wherein the inclined part (22c) of the wing part (22) is provided to have the same shape as an inclined part of the plastic liner (10), and the inclined part (22c) of the wing part (22) and the inclined part of the plastic liner (10) are combined with each other by the thermal bonding.

4. The high-pressure vessel of claim 1, wherein the metallic nozzle boss (30) includes:
a flange part (31) being combined with the wing part (22) of the plastic sealing member (20) so as to cover the wing part thereof, and
a boss part (32) extending along a longitudinal direction of the cylindrical part (21) of the plastic sealing member (20) from the flange part (31),
wherein the boss part (32) includes threads provided on an inner circumferential surface thereof so as to be engaged with a valve.

5. The high-pressure vessel of claim 4, wherein the flange part (31) of the metallic nozzle boss (30) is provided to be longer than the wing part (22) of the plastic sealing member (20) so as to be combined with the wing part (22) such that the flange part (31) completely covers the wing part (22).

6. The high-pressure vessel of claim 4, wherein the cylindrical part (21) of the plastic sealing member (20) is provided to extend up to the threads provided on the boss part of the metallic nozzle boss (30) such that the cylindrical part and the threads are connected to each other.

7. The high-pressure vessel of claim 4, further comprising:
the valve (50) screwed to the boss part (32) of the metallic nozzle boss (30) by being inserted thereinto.

8. The high-pressure vessel of claim 7, wherein a front end of the valve (50) is provided to be inserted to an inner side of the cylindrical part (21) of the plastic sealing member (20), and a front end part of the valve (50) positioned on the inner side of the cylindrical part (21) includes multiple valve O-rings combined thereon so as to maintain airtightness between the valve (50) and the cylindrical part (21).

9. The high-pressure vessel of claim 1, wherein the plastic liner (10) and the plastic sealing member (20) are combined with each other only by the thermal bonding without additionally including a fastening member and a rubber sealing member.

## Patentansprüche

1. Hochdruckbehälter für ein Fahrzeug, wobei der Hochdruckbehälter Folgendes umfasst:
eine Kunststoffauskleidung (10) mit einer daran vorgesehenen Durchgangsbohrung (11);
ein Kunststoffdichtungselement (20), das mit einem Abschnitt in der Durchgangsbohrung (11) positioniert ist und mit dem restlichen Abschnitt die Kunststoffauskleidung (10) überlagert,
wobei der die Kunststoffauskleidung (10) überlagernde Abschnitt durch thermisches Verbinden mit der Kunststoffauskleidung (10) kombiniert ist;
eine metallische Düsenhalterung (30), die mit dem Kunststoffdichtungselement (20) kombiniert ist, um den Abschnitt des Kunststoffdichtungselements (20), der die Kunststoffauskleidung (10) überlagert, abzudecken; und
eine Verbundmaterialschicht (40), die mit der Kunststoffauskleidung (10) und der metallischen Düsenhalterung (30) kombiniert ist, um die Kunststoffauskleidung (10) und die metallische Düsenhalterung (30) abzudecken; der Hochdruckbehälter für ein Fahrzeug, in dem
das Kunststoffdichtungselement (20) Folgendes umfasst:
einen zylindrischen Teil (21), der in der Durchgangsbohrung (11) der Kunststoffauskleidung (10) positioniert ist und ein eine Außenseitenrichtung der Kunststoffauskleidung (10) vorsteht, und
einen Flügelteil (22) mit einer kreisförmigen Plattenform, der dazu vorgesehen ist, sich entsprechend der Form der Kunststoffauskleidung (10) zu krümmen, während er sich in Radialrichtung von einem Ende des zylindrischen Teils erstreckt, und wobei ein festgelegter Abschnitt dessen mit einer Außenfläche der Kunststoffauskleidung (10) durch thermisches Verbinden kombiniert ist;
wobei die metallische Düsenhalterung (30) in das Kunststoffdichtungselement (20) geschraubt ist (M1) und **dadurch gekennzeichnet, dass**
ein Hauptabschnitt einer unteren Fläche der metallischen Düsenhalterung (30), welche der Kunststoffauskleidung (10) zugewandt ist, das Kunststoffdichtungselement (20) berührt und nur ein Abschnitt dessen die Kunststoffauskleidung (10) berührt.

2. Hochdruckbehälter nach Anspruch 1, wobei die Kunststoffauskleidung (10) aus einem durch Blasformen gefertigten Kunstharz besteht und während des Blasformens der Kunststoffauskleidung (10) durch thermisches Verbinden mit dem Kunststoffdichtungselement (20) kombiniert wird.

3. Hochdruckbehälter nach Anspruch 1, wobei der Flügelteil (22) einen angeschrägten Teil (22c) umfasst, der an einem Endteil davon vorgesehen ist, um zu einer Vorstehrichtung des zylindrischen Teils (21) hin anzusteigen,
wobei der angeschrägte Teil (22c) des Flügelteils (22) dazu vorgesehen ist, die gleiche Form wie ein angeschrägter Teil der Kunststoffauskleidung (10) zu haben, und wobei der angeschrägte Teil (22c) des Flügelteils (22) und der angeschrägte Teil der Kunststoffauskleidung (10) durch thermisches Verbinden miteinander kombiniert sind.

4. Hochdruckbehälter nach Anspruch 1, wobei die metallische Düsenhalterung (30) Folgendes umfasst:
einen Flanschteil (31), der mit dem Flügelteil (22) des Kunststoffdichtungselements (20) kombiniert ist, um den Flügelteil davon abzudecken, und
einen Halterungsteil (32), der sich entlang einer Längsrichtung des zylindrischen Teils (21) des Kunststoffdichtungselements (20) vom Flanschteil (31) erstreckt,
wobei der Halterungsteil (32) ein Gewinde umfasst, das auf einer Innenumfangsfläche dessen vorgesehen ist, um in ein Ventil einzugreifen.

5. Hochdruckbehälter nach Anspruch 4, wobei der Flanschteil (31) der metallischen Düsenhalterung (30) dazu vorgesehen ist, länger zu sein als der Flügelteil (22) des Kunststoffdichtungselements (20), um mit dem Flügelteil (22) derart kombiniert zu werden, dass der Flanschteil (31) den Flügelteil (22) vollständig abdeckt.

6. Hochdruckbehälter nach Anspruch 4, wobei der zylindrische Teil (21) des Kunststoffdichtungselements (20) dazu vorgesehen ist, sich zu dem am Halterungsteil der metallischen Düsenhalterung (30) vorgesehenen Gewinde zu erstrecken, sodass der zylindrische Teil und das Gewinde miteinander verbunden sind.

7. Hochdruckbehälter nach Anspruch 4, ferner Folgendes umfassend:
das Ventil (50), das durch Einsetzen darin mit dem Halterungsteil (32) der metallischen Düsenhalterung (30) verschraubt ist.

8. Hochdruckbehälter nach Anspruch 7, wobei ein vorderes Ende des Ventils (50) dazu vorgesehen ist, in eine Innenseite des zylindrischen Teils (21) des Kunststoffdichtungselements (20) eingesetzt zu sein, und ein vorderer Endteil des Ventils (50), der an der Innenseite des zylindrischen Teils (21) positioniert ist, mehrere darauf kombinierte Ventil-O-Ringe umfasst, um zwischen dem Ventil (50) und dem zylindrischen Teil (21) eine Luftdichtigkeit zu erhalten.

9. Hochdruckbehälter nach Anspruch 1, wobei die Kunststoffauskleidung (10) und das Kunststoffdichtungselement (20) nur durch thermisches Verbinden miteinander kombiniert sind, ohne ein zusätzliches Befestigungselement und Kautschukdichtungselement.

## Revendications

1. Récipient à haute pression pour un véhicule, le récipient à haute pression comprenant :
un revêtement en plastique (10) comprenant un trou traversant (11) placé sur celui-ci ;
un organe d'étanchéité en plastique (20), dont une partie est positionnée dans le trou traversant (11) et dont une partie restante chevauche le revêtement en plastique (10),
dans lequel la partie chevauchant le revêtement en plastique (10) est combinée avec le revêtement en plastique (10) par liaison thermique ;
un raccord de buse métallique (30) combiné à l'organe d'étanchéité en plastique (20) de façon à couvrir la partie de l'organe d'étanchéité en plastique (20) qui chevauche le revêtement en plastique (10) ; et
une couche de matériau composite (40) combinée au revêtement en plastique (10) et au raccord de buse métallique (30) de façon à couvrir le revêtement en plastique (10) et le raccord de buse métallique (30) ;
le récipient à haute pression pour un véhicule dans lequel
l'organe d'étanchéité en plastique (20) comprend une partie cylindrique (21) positionnée dans le trou traversant (11) du revêtement en plastique (10) et faisant saillie dans une direction latérale externe du revêtement en plastique (10), et
une partie d'aile (22) de forme circulaire plate prévue pour fléchir de façon à correspondre à une forme du revêtement en plastique (10) tout en s'étendant dans une direction radiale depuis une extrémité de la partie cylindrique et dont une section prédéterminée est combinée avec une surface externe du revêtement en plastique (10) par la liaison thermique ;
dans lequel le raccord de buse métallique (30) est vissé sur l'organe d'étanchéité en plastique (20) (M1) ; et
**caractérisé en ce que**
une partie principale d'une surface inférieure du raccord de buse métallique (30), qui fait face au revêtement en plastique (10), est en contact avec l'organe d'étanchéité en plastique (20), et seule une partie de celle-ci est en contact avec le revêtement en plastique (10).

2. Récipient à haute pression selon la revendication 1, dans lequel le revêtement en plastique (10) est constitué d'une résine plastique par moulage par soufflage et est combinée à l'organe d'étanchéité en plastique (20) par la liaison thermique pendant le moulage par soufflage du revêtement en plastique (10).

3. Récipient à haute pression selon la revendication 1, dans lequel la partie d'aile (22) comprend une partie inclinée (22c) placée sur une partie d'extrémité de celle-ci de façon à s'incliner vers une direction de saillie de la partie cylindrique (21),
dans lequel la partie inclinée (22c) de la partie d'aile (22) est conçue pour présenter la même forme qu'une partie inclinée du revêtement en plastique (10), et la partie inclinée (22c) de la partie d'aile (22) et la partie inclinée du revêtement en plastique (10) sont combinées l'une avec l'autre par la liaison thermique.

4. Récipient à haute pression selon la revendication 1, dans lequel le raccord de buse métallique (30) comprend :
une partie bride (31) combinée avec la partie d'aile (22) de l'organe d'étanchéité en plastique (20) de façon à couvrir la partie d'aile de celui-ci, et
une partie raccord (32) s'étendant le long d'une direction longitudinale de la partie cylindrique (21) de l'organe d'étanchéité en plastique (20) depuis la partie bride (31),
dans lequel la partie raccord (32) comprend des filets placés sur une surface circonférentielle interne de celle-ci de façon à venir en prise avec une vanne.

5. Récipient à haute pression selon la revendication 4, dans lequel la partie bride (31) du raccord de buse métallique (30) est conçue pour être plus longue que la partie d'aile (22) de l'organe d'étanchéité en plastique (20) de façon à se combiner avec la partie d'aile (22) de sorte que la partie bride (31) couvre complètement la partie d'aile (22).

6. Récipient à haute pression selon la revendication 4, dans lequel la partie cylindrique (21) de l'organe d'étanchéité en plastique (20) est conçue pour s'étendre jusqu'aux filets placés sur la partie raccord du raccord de buse métallique (30) de sorte que la partie cylindrique et les filets soient reliés les uns aux autres.

7. Récipient à haute pression selon la revendication 4, comprenant en outre :
la vanne (50) vissée sur la partie raccord (32) du raccord de buse métallique (30) par insertion en son sein.

8. Récipient à haute pression selon la revendication 7, dans lequel une extrémité avant de la vanne (50) est conçue pour être insérée sur un côté interne de la partie cylindrique (21) de l'organe d'étanchéité en plastique (20), et une partie d'extrémité avant de la vanne (50) positionnée sur le côté interne de la partie cylindrique (21) comprend de multiples joints toriques de vanne combinés dessus de façon à maintenir une étanchéité à l'air entre la vanne (50) et la partie cylindrique (21).

9. Récipient à haute pression selon la revendication 1, dans lequel le revêtement en plastique (10) et l'organe d'étanchéité en plastique (20) sont combinés l'un avec l'autre uniquement par la liaison thermique sans comprendre en plus un organe de fixation et un organe d'étanchéité en caoutchouc.
